Europäisches Patentamt

European Patent Office

Office européen des brevets

(11) Publication number: **0 320 823 B1**

## (12) EUROPEAN PATENT SPECIFICATION

(45) Date of publication of patent specification: **11.11.92**　(51) Int. Cl.⁵: **B65G 1/06**, B65G 47/26

(21) Application number: **88120651.0**

(22) Date of filing: **09.12.88**

(54) **Shelf appartus utilizing rollers.**

(30) Priority: **15.12.87 JP 190585/87 U**
**02.02.88 JP 13430/88 U**
**09.02.88 JP 16119/88 U**
**09.02.88 JP 16120/88 U**
**17.03.88 JP 35625/88 U**
**18.05.88 JP 65292/88 U**
**18.05.88 JP 65293/88 U**
**18.05.88 JP 65294/88 U**

(43) Date of publication of application:
**21.06.89 Bulletin　89/25**

(45) Publication of the grant of the patent:
**11.11.92 Bulletin　92/46**

(84) Designated Contracting States:
**BE DE FR GB IT NL**

(56) References cited:
**EP-A- 0 199 063**
**DE-A- 2 029 395**

(73) Proprietor: **DAIFUKU CO., LTD.**
**3-2-11, Mitejima Nishi-yodogawa-ku**
**Osaka 555(JP)**

(72) Inventor: **Hatouchi, Gokichi c/o Daifuku Co.,**
**Ltd.**
**Komaki Plant 1500, Komakibarashinden**
**Komaki-shi Aichi-ken(JP)**

(74) Representative: **Le Vrang, Klaus et al**
**Barske & le Vrang Fliederstrasse 1**
**W-8071 Wettstetten(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

FIELD OF THE INVENTION

The present invention relates to a shelf apparatus according to the preamble portion of claim 1, using rollers, which is employed for storing loads either directly or through pallets and taking them out as needed.

BACKGROUND OF THE INVENTION

Conventionally, a kind of shelf apparatus, as found in, e.g., Japanese Utility Model Publication No. 18750/1986, comprises wheel rails having a number of wheels and disposed in a plurality of vertically spaced stages in a frame, with the direction of transport (slide) being inclined. According to this conventional shelf apparatus, a load fed to on the upper region of the slope slides down on the wheels until it is stopped by a stopper installed at the lower end; thus, successively fed loads are stopped for storage by their respective preceding loads. Loads which are stored are taken out as needed from the lower region of the slope and the vacancies thus formed are filled in that succeeding loads slide down to fill such vacancies. In this conventional example, putting in and out of loads is manually effected, but in a large-sized shelf apparatus, for example, a forklift cart is used to carry in and out loads.

According to the conventional shelf apparatus as described above, transport of loads is effected by slide movement utilizing the free rotation of wheels; thus, if the free rotation of wheels fail to take place smoothly or if there is a variation in the weight of loads, the slide movement does not take place positively, lacking in reliability. Further, from the standpoint of frictional resistance, there are some pallets which cannot be employed because of the material of which they are made. It is conceivable that this can be coped with by providing a sufficient angle of inclination; however, a large angle of inclination results in the slide speed becoming high and varying, so that when a load is stopped by a stopper, a high shock is exerted; thus loads become unstable. Also, the dead space for the slope increases, resulting in inefficient storage.

EP-A 0 199 063 discloses a shelf apparatus of the aforsaid type including roller conveyors defining a horizontal direction in which the loads are moved. However, the free rollers in this known shelf apparatus are fully elongatd in the direction transverse to the direction in which the loads are moved these free rollers are heavy and have a great moment of inertia. The frictional drive of these rollers is therefor subject to an undesired wear. Furthermore there is required a high starting voltage for the motor to drive these free rollers. Furthermore, in this prior art shelf apparatus there exists the problem that the load could be moved in zig-zag along its transporting direction.

It is object of the invention to suggest a shelf apparatus according to the preamble portion of claim 1 which has a reduced wear tan the drive of the free rollers.

This object is solved by a shelf apparatus according to claim 1.

The free rollers constituting a roller conveyor, upon which a load is allowed to rest, form a plurality of files in the direction in which the load is moved, and free rollers adapted to be driven by a driving means form only one of these files. Opposed guide means are mounted on opposite sides of a transport path defined by the roller conveyor.

BRIEF DESCRIPTION OF THE DRAWINGS

Fig. 1 is a side view of the shelf apparatus;
Fig. 2 is a side view, in section, of a roller conveyor;
Figs. 3 through 11 are schematic side views showing an example of the operating state of the roller conveyor;
Figs. 12 through 14 are schematic side views showing another example of the operating state of the roller conveyor;
Fig. 15 is a side view, in section, of another embodiment of the drive of the roller conveyor;
Fig. 16 is a schematic side view showing the whole of the roller conveyor of Fig 15;
Fig. 17 is a schematic side view of the whole of a roller conveyor in a third embodiment of the drive means;
Fig. 18 is a schematic side view of the whole of a roller conveyor in a fourth embodiment of the drive means;
Fig. 19 is a plan view of the shelf apparatus;
Fig. 20 is a schematic side view showing the whole of a roller conveyor in another embodiment;
Fig. 21 is a front view of a shelf apparatus using divided rollers according to the invention;
Fig. 22 is an enlarged front view, in section, showing the roller conveyor in the shelf apparatus of Fig. 21;
Fig. 23 is a front view of a shelf apparatus using rollers of a second embodiment of the invention;
Fig. 24 is an enlarged front view, in section, showing the roller conveyor in the shelf apparatus of Fig. 23;
Fig. 25 is a side view, in section, of the roller conveyor of Fig. 24;
Fig. 26 is a front view of a shelf apparatus using rollers of a third embodiment of the invention; and

Fig. 27 is an enlarged front view, in section, showing the roller conveyor in the shelf apparatus of Fig. 26.

## DESCRIPTION OF THE EMBODIMENTS

The numeral 50 denotes a shelf frame comprising a plurality of transversely disposed front pillars 51, a plurality of transversely disposed rear pillars 52, front transverse members 53 connecting the front pillars 51, rear transverse members 54 connecting the rear pillars 52, and connecting members 55 connecting the front and rear pillars 51 and 52. Housed in a plurality of vertically and transversely spaced compartments defined between the pillars 51 and 52 of the shelf frame 50 are roller conveyors 60 each having a number of free rotation rollers, the direction of transport being horizontal.

The main frame 1 of each roller conveyor 60 is composed of a pair of lateral frames 1A and 1B and a base frame 1C connecting the lower regions of these lateral frames 1A and 1B. There are a plurality of such base frames 1C disposed in the direction of transport.

The lower portion of one lateral frame 1A has a pair of upper and lower guide rails 7 and 8 disposed therein in the direction of transport of the roller conveyor 60 through attachment portion 5. In the opposed inner sides of the lateral frames 1A and 1B, support frames 9 of resin are disposed with their lower ends fitted in the guide portions 2, so that their positions can be changed by sliding them in the direction of the length of the frame. The support frames 9 are fixed in their changed positions by inserting bolts 10 into attachment holes 11A and 11B formed in their vertically intermediate regions thereof and screwing them into nuts.

One support frame 9A is in the form of a case comprising a base plate portion 12 formed with a lower end adapted to fit in the guide portion 2A and an attachment hole, a pair of cover plate portions 13 extending from the lower half of said base plate portion 12 toward the other support frame, and a connecting plate portion 14 extending between said cover plate portions 13. A pair of upper and lower through-holes 15a and 15b are formed above said attachment hole 11A in the base plate portion 12.

The other support frame is a rectangular plate having a pair of attachment holes 11B. The upper and lower sides between which said attachment holes 11B are formed with engagement grooves whose end surfaces associated with the upper and lower ends of the second support frame and end surfaces directed toward the first support frame 9A are open. The distances from the respective bottoms of the engagement grooves to the attachment holes 11B are equal to the distances from the attachment hole 11A in the support frame to the through-holes 15a and 15b.

A free roller 28 of resin is rotatably mounted between the support frames through a roller shaft 27. The roller shaft 27, relatively rotatably inserted in the free roller 28, is inserted at one end thereof in either of the through-holes 15a and 15b and fitted at the other end thereof in either of the engagement grooves from above, whereby the roller shaft 27 is installed in position and the free roller 28 is rotatable around the roller axis 29.

A support shaft 18 extending along the roller shaft 29 is vertically swingably attached to the support frame 9A. More specifically, the lower end of the base plate portion 12 is formed with a bearing portion 19, in which one end of the support shaft 18 is fitted, the other end being vertically swingable. An L-shaped plate portion 23 of resin is inserted between the free ends of the cover plate portions 23, and the other end of the support shaft 18 is fitted in a vertically extending recess formed in the vertical plate of the L-shaped plate portion 23, whereby the range of vertical swing movement is defined.

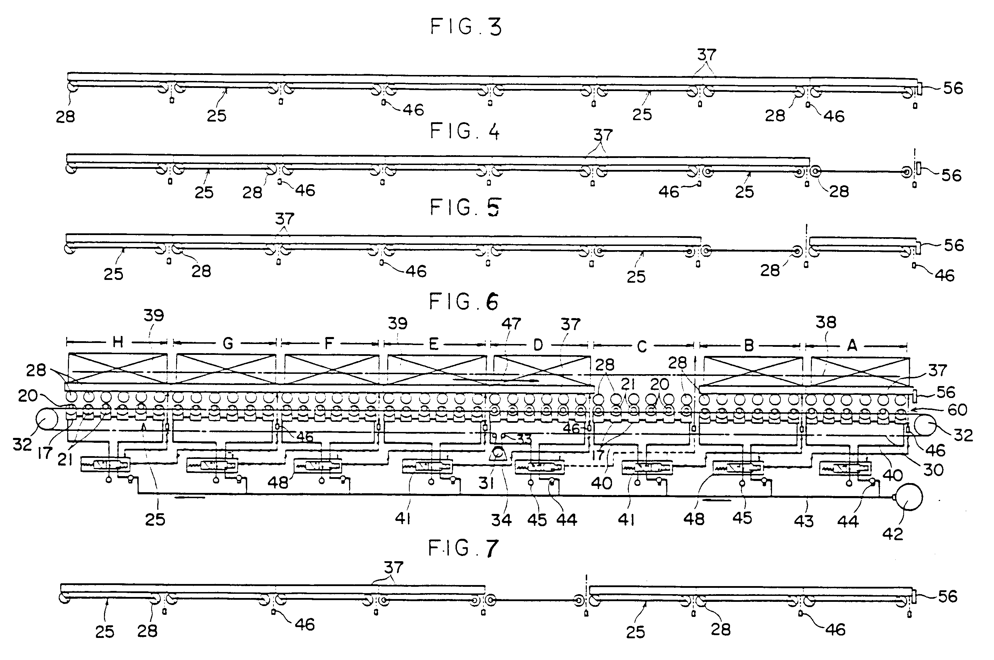

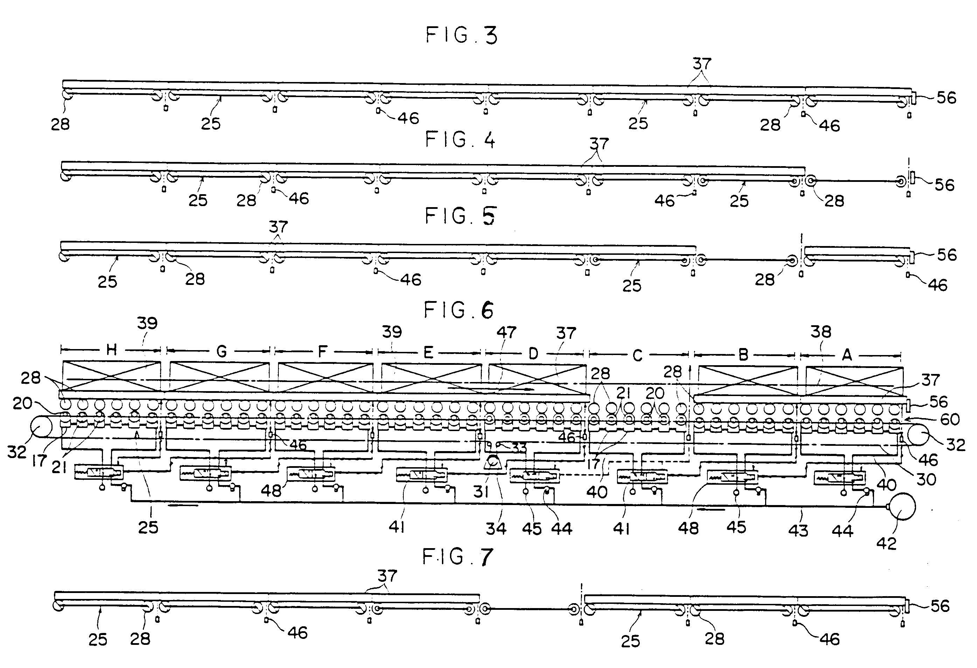

The support shaft 18 has a sprocket 20 rotatably mounted thereon, and a transmission roller 21 is fitted on the boss portion of the sprocket 20 so that the two parts 20 and 21 are rotatable as one piece. This transmission roller 21 is made of urethane rubber and is adapted to be contacted at its outer periphery with and separated from the lower region of the outer periphery of the free roller 28 by the vertical swing movement of the support shaft 18. An air cylinder device 17 for effecting this contact and separation movement is installed between a cylinder rubber support attached to the other end of the support shaft 18 and the lateral plate of the L-shaped plate portion 23. These members 17-23 constitute a unitized driving device 25. The driving device 25 is associated with the free roller 28 through the support frames to form a set; a number of such sets, as shown in Fig. 6, are mounted on the main frame 1 in the direction of transport of the conveyor 60.

The chain 30, which is a driving body common to the sprockets 32, is installed between a driving sprocket 31 and driven sprockets 32 through guide sprockets 33, said driving sprocket 31 being operatively connected to a motor 34.

Free rollers 28 each paired with a driving device 25 are disposed on the main frame 1 with a predetermined pitch P, thereby constituting a transport path 38. The numeral 39 denotes an object to be transported, which is transported through a pallet 37. The terminal end of the transport path 38 is provided with a stopper 56 which is fixed on the side associated with the shelf frame 50.

In the example shown in Fig. 6, six free rollers 28 each paired with a driving device 25 form a group, and eight such groups A, B, C, D, E, F, G and H are disposed in a predetermined manner, with a driving device 25 being connected to or disconnected from the free roller 28 in each group. That is, for each group, there is provided an air charge and discharge hose 40 connected in series with the air cylinder 17. These air charge and discharge hoses 40 are selectively connectable to a common air supply hose 43 through their respective solenoid valves 41. The numeral 44 denotes regulators and 45 denotes silencers. The downstream end of each of the groups A, B, C...H in the direction of transport 47 is provided with a photosensor 46 which is an example of a load detector.

In two adjacent groups in the direction of transport 47, when the photosensor 46 of the upstream group detects a load but the photosensor 46 of the downstream group does not detect a load, the driving devices 25 of the two groups simultaneously effect pressure contact with the free rollers 28, that is, the air supply hose 43 is connected to the air charge and discharge hoses 40. If the photosensors 46 of the two groups simultaneously detect or do not simultaneously detect loads, the driving devices 25 of the two groups simultaneously effect separation, that is, the air supply hose 43 is disconnected from the air charge and discharge hoses 40. For this purpose, the solenoid valves 41 are installed in the respective control units 48. The most downstream group A alone is arranged so that when its photosensor 46 detects a load, the driving device 25 effects separation.

The transport operation based on the above arrangement will now be described.

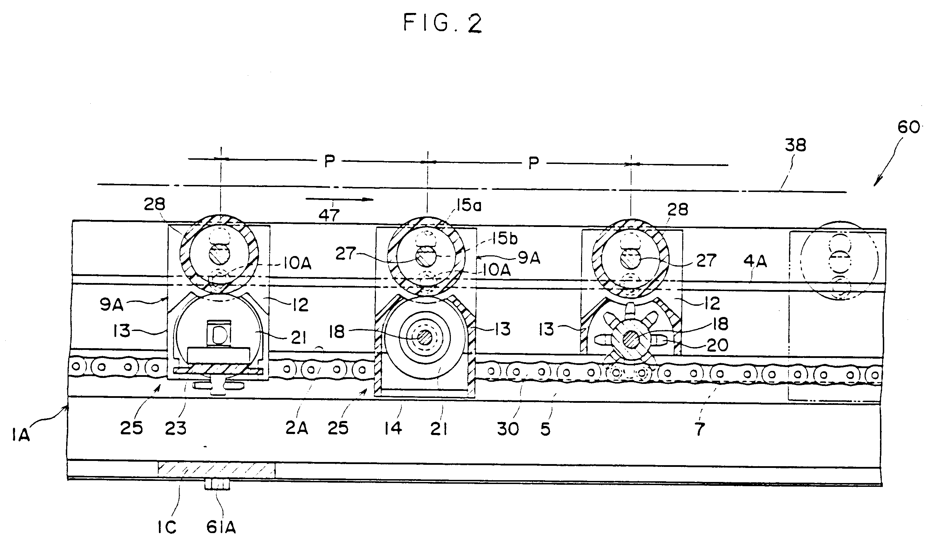

Fig. 2 shows a state in which the solenoid valve 41 is switched for connecting the air supply hose 43 to the air charge and discharge hose 40 to extend the air cylinder device 17 so as to cause the support shaft 18 to swing upward to press the transmission roller 21 upwardly against the free roller 28. At this time, the chain 30 is constantly driven by the motor 34, so that the sprocket 20 engaging the chain 30 is rotating around the support shaft 18. Further, the transmission roller 21 abuts against the lower portion of the outer periphery of the corresponding free roller 28; thus the free rollers 28 are forcibly rotated and hence pallets 37 can be transported on the transport path 38.

The roller conveyor 60 effects the transport of pallets (loads) 37 basically in the above-described manner, but in practice transport control is effected on the basis of detection and non-detection by photosensors 46. With the transport path 38 is empty, when a pallet 37 is unloaded onto the group H at the upstream end of the transport path 38, the photosensor 46 of the group H makes a detecting operation. At this time, since the photosensor 46 of the group G is the non-detecting state, the free rotation rollers 28 of the two groups H and G are forcibly rotated by the operation of the control units 48 and solenoid valves 41, whereby the pallet 37 is transported from group H to group G. When the pallet 37 enters the group G, the photosensor 46 of this group G senses it, so that the groups G and F effect connection so as to transport the pallet 37 to the group F. The pallet 37 which is transported successively downstream in this manner finally abuts against the stopper 56 and stops there to be stored in the group A. The photosensor 46 detects this pallet 37, so that the transmission roller 21 in the group A is separated from the free roller 28. The second pallet 37 is likewise transported until it abuts against the pallet 37 in the group A and stored in the group B. At this time, the photosensor 46 of the group B detects the pallet 37 but since the photosensor 46 of the group A is also detecting the first pallet 37, the transmission roller 21 of this group B is also separated from the free roller 28.

In such operation, as shown in Fig. 3, suppose that pallets 37 have been stored in all groups A through H and that all transmission rollers 21 have been separated from the free rollers 28.

In this state, if the forklift cart 68 takes out the pallet 37 of the group A, as shown in Fig. 4, the photosensor 46 of the group A becomes non-sensing; therefore, the driving devices 25 of the groups A and B effect connection, whereby the pallet 37 of the group B is transported to the group A, as shown in Fig. 5. Thereupon, the photosensor 46 of the group B assumes the non-detecting state, so that the driving devices 25 of the groups B and C effect connection, thereby transporting the pallet 37 of the group C to the group B, as shown in Fig. 6. With such action repeated, successive feeding of pallets 37 is effected, as shown in Figs. 7 through 11.

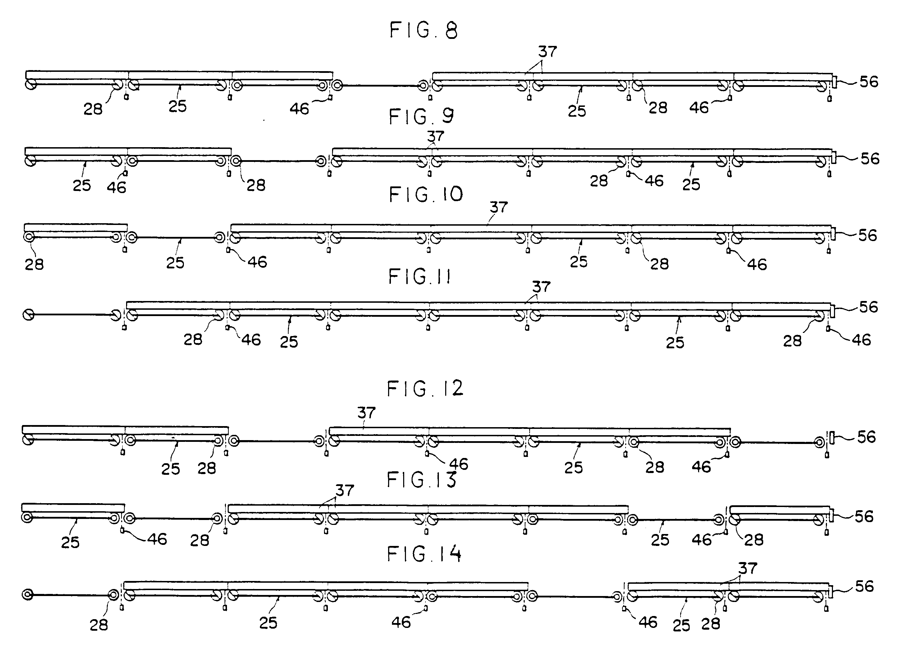

For example, suppose that the photosensor 46 of the group F is the non-detecting state, as shown in Fig. 9. In this state, if the pallet 37 of the group A is removed, as shown in Fig. 12, then successive feeding is effected at two places in the direction of the transport 47, as shown in Figs. 13 and 14. Likewise, successive feeding at three or more places is possible.

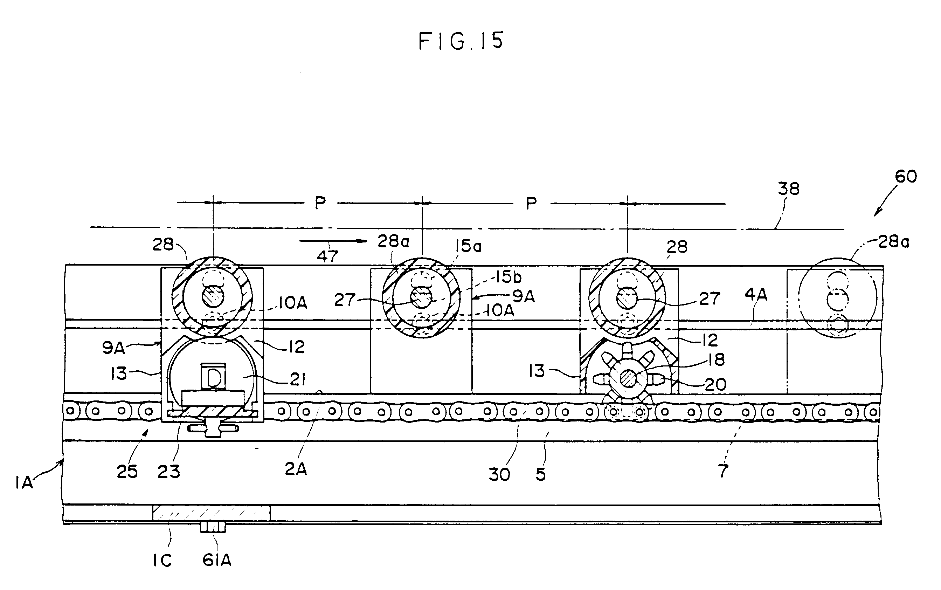

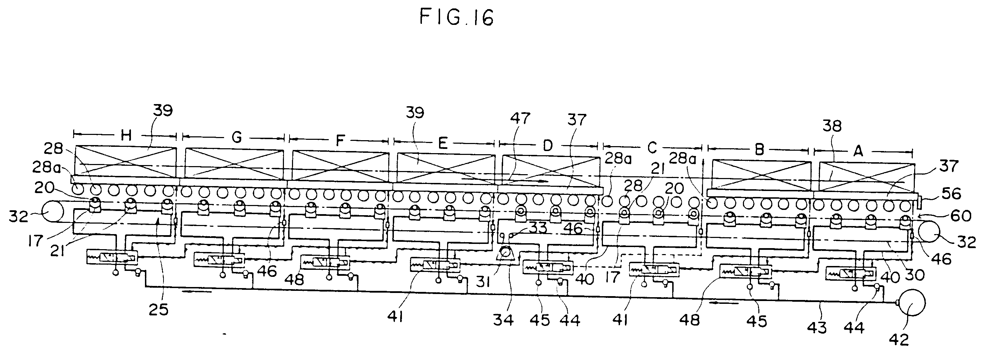

A second embodiment of the roller driving means is shown in Figs. 15 and 16. In this case, the driving devices 25 are respectively paired with every other free roller 28 in the direction of transport 47. In the places where there is no driving device, the support frame 9A is simply in the form of a rectangular plate, having through-holes 15a and 15b formed therein for receiving one end of the roller shaft 27 of the free roller 28a.

According to such arrangement, the free rollers 28 paired with the driving devices 25 are forcibly rotated by the latter, whereby pallets 37 are transported on the transport path 38. At this time, the non-driven free rollers 28a make an accompanying rotation. Since only some of the free rollers 28, 28a are driven, the cost for the driving devices 25 is reduced as compared with that required for driving all of them.

The above shows an example in which driven free rollers 28 alternate with the non-driven free rollers 28a; however, free rollers 28 may be installed at every four places. Further, in each of the groups A through H, if a driven free rotation roller 28 is installed at the downstream end in the direction of transport 47, then even if pallets 37 are made of resin, they can be positively delivered from each group; particularly when the present invention is incorporated in an automatic warehouse, automatic operation of a device for putting loads in and out can be reliably performed.

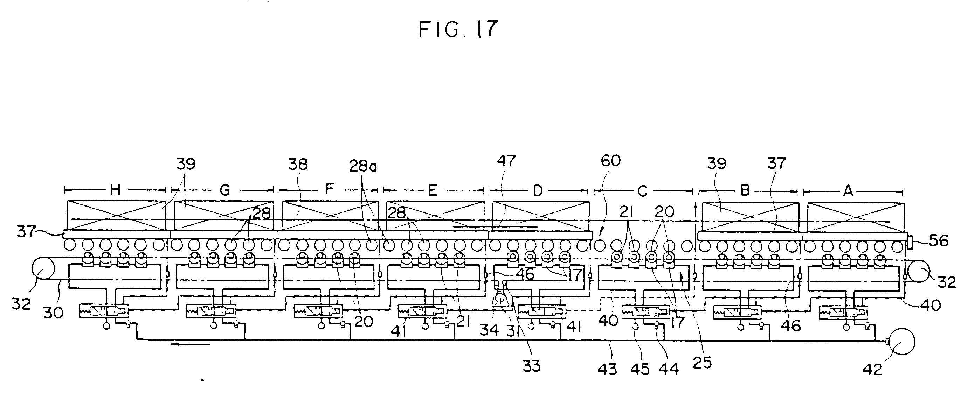

Fig. 17 shows a third embodiment of the driving means of the rollers. In this example, in each of the groups A through H, the upstream and downstream free rollers in the direction of transport 47 are non-driven free rollers 28a, while the remaining four free rollers are free rollers 28 which are respectively paired with driving devices 25.

According to such arrangement, in the load storage state, when each of the groups B through H on the upstream side in the direction of transport 47 is driven for successively feeding pallets 37, of the free rollers 28 and 28a, only the intermediate free rollers 28 in this group are driven. As a result, the transport force to be transmitted to pallets 37 is reduced, so that successive feeding of pallets 37 is slowly effected; therefore, separation between pallets 37 on the further upstream side in the contacted storage state and pallets 37 to be successively fed is reliably effected. Further, as in the case of the second embodiment described above, the number of driving devices 25 and the capacity of the motor 34 can be reduced as compared with the case of driving all free rollers.

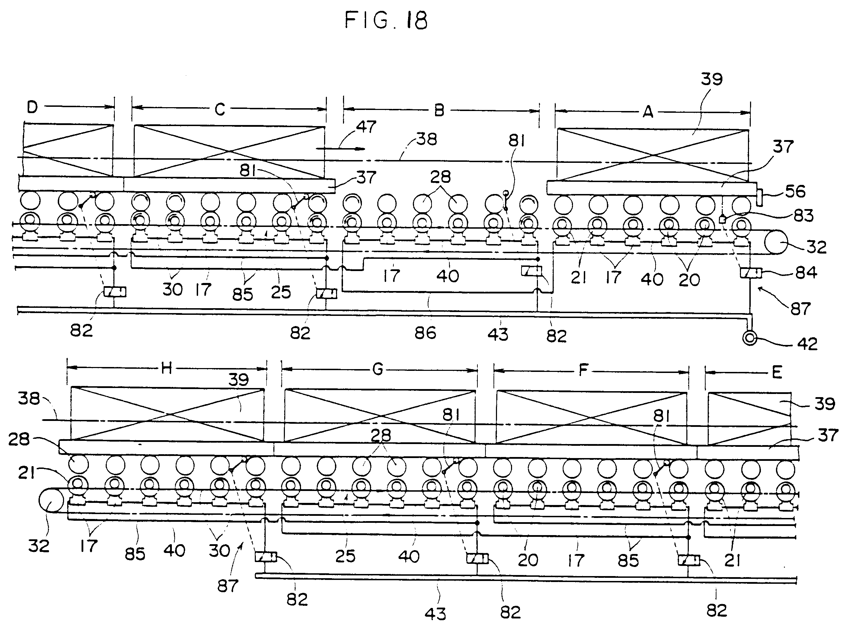

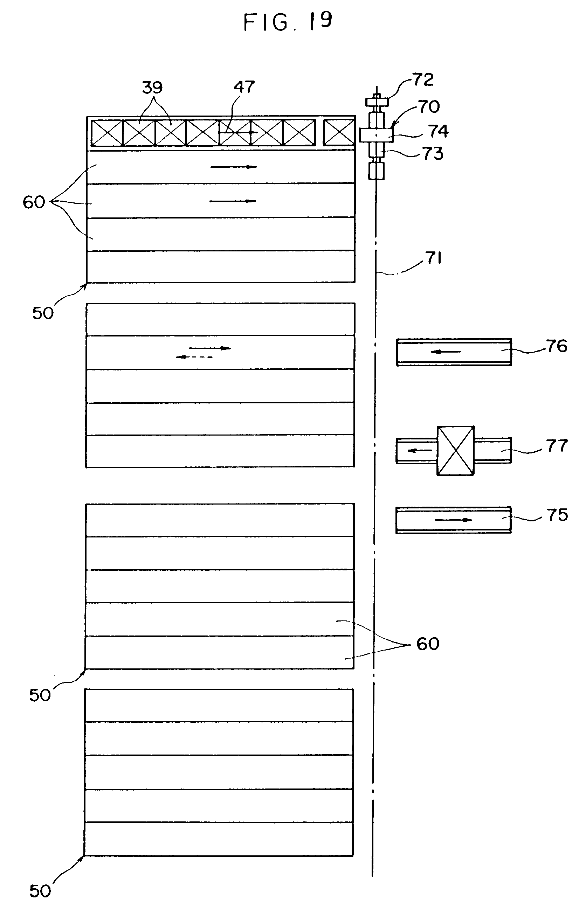

Figs. 18 and 19 show a further possibility for the function of the apparatus. In this example, driving devices 25 are paired with all free rollers 28, and each group is provided with an air charge and discharge hose 40 having series-connected air cylinder devices 17, the respective downstream ends of these air charge and discharge hoses being selectively connectible via respective valves devices to and disconnectible from a common air supply hose 43 extending from an air supply device 42. As to the valves devices, the groups B through H, excepting the most downstream group A, have mechanical valves 82. Upwardly directed actuator rods 81 project above the transport plane upstream of the respective most downstream free rotation rollers 28 in the groups B through H. The most downstream group A has a solenoid valve 84 associated with a photocell 83 for detecting loads, the detection light being directed upward.

When any actuator rod 81 projects upward because of absence of a load, the associated mechanical valve 82 connects the air charge and discharge hose 40 to the air supply hose 43, whereas if a pallet 37 is present and the actuator rod 81 is thereby depressed, the mechanical valve 82 disconnects the air charge and discharge hose 40 from the air supply hose 43. The solenoid valve 84 connects the hoses 40 and 43 when the photosensor 83 is the non-detecting state with no pallet 37 present and disconnects the hoses 40 and 43 when the photosensor 83 is in the detecting state with a pallet 37 present.

In the groups C through H other than the two downstream groups A and B, the downstream ends of the air charge and discharge hoses 40 are connected via respective connecting hoses 85 to the upstream ends of the charge and discharge hoses 40 in the groups B through G located respectively one group downstream. In the two downstream groups A and B, the downstream ends of the air charge and discharge hoses 40 are connected together by a connecting hose 86. The hoses 40, 43, 85 and 86 constitute an operating circuit 87 having driving devices 25 and valve devices placed therein. The operating circuit 87 operates such that when there is no load in the downstream one of two adjacent groups in the direction of transport 47, it connects the two driving devices 25 to the free rollers 28 and such that when there is a load in the most downstream group A, it disconnects the driving device 25 from the free roller 28.

As shown in Figs. 18 and 19, a load handling device 70 is installed outside the shelf frame 50 in opposed relation to the most downstream group A. The load handling device 70 comprises a traveling machine body 72 capable of moving back and forth in a predetermined path 71 along a row of shelf apparatuses, an elevating frame 73 mounted on said traveling machine body 72, and a fork 74 adapted to be advanced and retracted transversely of the elevating frame 73. On the side of the predetermined path 71 opposite the row of shelf apparatuses, there are a shipping conveyor 75, a return conveyor 76, and an empty pallet conveyor 77.

The transport operation according to the above arrangement will now be described.

If the transport path 38 is empty, the respective actuator rods 81 of the mechanical valves 82 are projecting and are in the non-detecting state and the photosensor 83 of the solenoid valve 84 is also in the non-detecting state, with the result that the air from the air supply hose 43 is fed to all charge and discharge hoses 40 via the mechanical valves 82 and solenoid valve 84, thereby extending the air cylinder devices to forcibly rotate all free rollers 28 of all groups A through H. In this state, if a pallet 37 is unloaded onto the upstream group H as by a forklift cart, the mechanical valve 82 of the group H has its actuator rod 81 depressed and thereby effects disconnection. However, since the mechanical valve 82 of the group G located one group downstream is in the non-detecting state, as described above, part of the air fed to this group G is fed to the charge and discharge hose 40 via the connecting hose 85, thereby causing the air cylinder device 17 of the group H to effect connection. Thus, the free rollers 28 of he groups H and G are forcibly rotated to transport the pallet 37 from the group H to the Group H. When the pallet 37 enters the group G, the mechanical valve 82 of this group G makes a detecting action, but since the group F is in the non-detecting state, as described above, the free rollers 28 of the group G are forcibly rotated to transport the pallet 37 from the group G to the group F. In this manner, the pallet 37 transported successively downstream until it is stored in the group A.

The photosensor 83 of the group A detects this pallet 37 and causes the solenoid valve 84 to effect separation, whereupon the supply of air to the charge and discharge hose 40 of the group A is stopped and simultaneously therewith the charge and discharge hose 40 is opened, so that the driving device 25 of the group A effects separation to stop the forcible rotation of all free rollers 28 of this group A.

The second pallet 37 is likewise transported; it abuts against the pallet 37 in the group A and stored in the group B. At this time, detection is effected in the group B, but since group A is also in the detecting state, separation is effected in this group B.

In such state, when the pallet 37 in the group A is taken out by the load handling device 70, the photosensor 83 of the group A assumes the non-detecting state, so that the groups A and B effect connection, whereby the pallet 37 in the group B is transported to the group A. Thereupon, the actuator rod 81 of the group B assumes the non-detecting state, as shown in Fig. 18, so that connection is effected in the groups B and C, transporting the pallet 37 in the group C to the group B. With such action repeated, successive feeding of the pallet 37 is effected as in the case of Figs. 7 through 11.

The taking out of the pallet 37 from the group A by the load handling device 70 is effected by a combination of the traveling of the traveling machine body 72, the rising and lowering movement of the elevating frame 73 and the lateral advance and retraction of the form 74. The pallet 37 taken out is transferred to the shipping conveyor 75 in a similar operation. A pallet 37 shipped by mistake is transferred to the return conveyor 76, while empty pallets 37 are stacked and transferred to the empty pallet conveyor 77. These pallets 37 are transferred to a particular transport path 38 by the reverse operation of the load handling device 70, and in this particular location, the direction of transport 47 is reverse to the other locations.

Forking mistakes sometimes occur during the taking out of pallets 37 by the fork 74 of the load handling device 70 or forklift cart 68. In this case, when the pallet 37 is within the range of detection by the photosensor 83 as when this pallet 37 is slightly raised or moved for removal, the solenoid valve 84 maintains disconnected state of the hoses 40 and 43. Therefore, in this case, since the group B is also in the disconnected state, as described in the preceding embodiment, the pallet 37 in this group B is not transported; thus, when the operator is aware of the forking mistake, he can return the pallet 37 to the group A.

In addition, the output signal from the photosensor 83 can be utilized in ground control as a load detecting signal indicating the presence of a load in the group A. Also, when pallets 37 are taken out by a forklift cart instead of by the load handling device 70, it is possible to light a load presence indicator lamp on the basis of the load detecting signal.

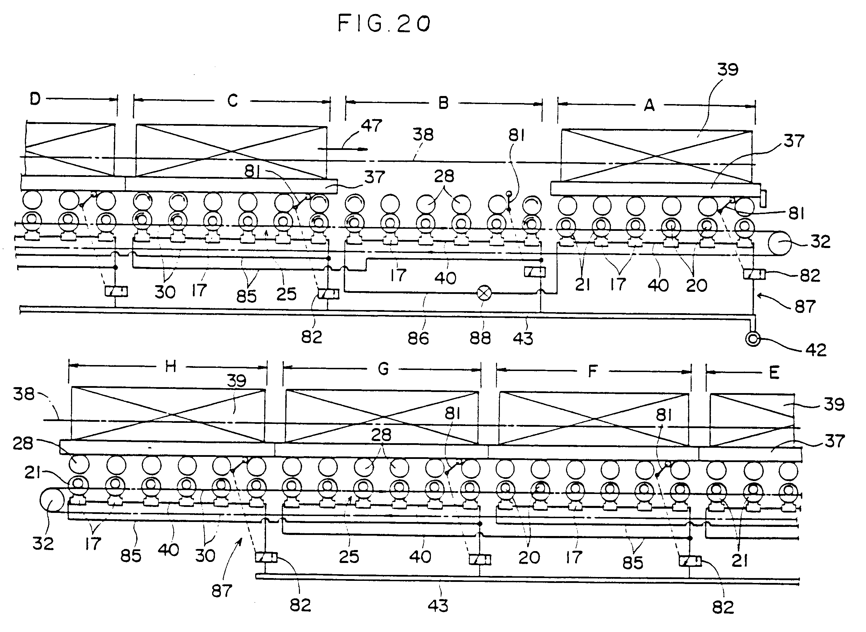

Fig. 20 shows a further arrangement how to charge and discharge the shelf apparatus. This embodiment, as in the preceding embodiment, has mechanical valves 82 serving as load presence detecting devices each having an actuator rod 81. Further, in this embodiment, not only the groups B through H but also the group A has a mechanical valve 82 having an actuator rod 81.

In the groups C through H other than the two downstream groups A and B, the downstream ends of the air charge and discharge hoses 40 are connected via connecting hoses 85 to the downstream ends of the air charge and discharge hoses 40 in the groups B through G located respectively one group downstream. In the two downstream groups A and B, the upstream ends of the air charge and discharge hoses 40 are connected by a connecting hose 86 which has a time delay valve 88 placed therein.

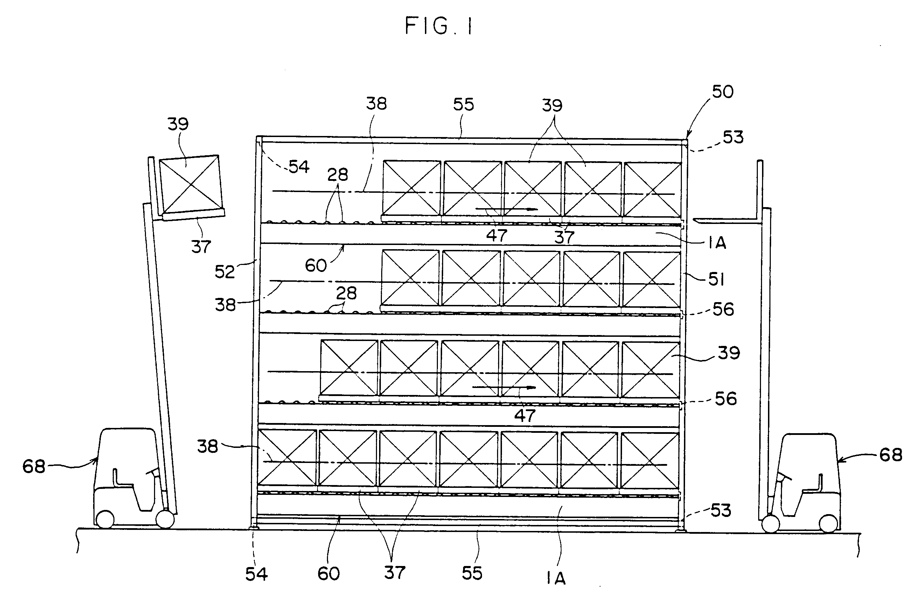

As compared with the forgoing embodiment using a load handling device 70, the embodiment shown in Fig. 20 is suitable for use in the case of using a forklift cart 68 such as in Fig. 1. In this case, forking mistakes sometimes occur during taking out the pallet 37 of the group A by the forklift cart 68. If no measures are taken under these circumstances, the mechanical valve 82 of the group A assumes the non-detecting state, so that the pallet 37 in the group B is fed to the group A; thus, the forked pallet 37 cannot be returned to the group A. According to this embodiment, however, since the connecting hose 86 is closed for a certain time by the time delay valve 46, separation can be established in the group B and maintained for this preset time. Therefore, when the operator is aware of the forking mistake, he can return the pallet 37 to the group A.

In these two embodiments, as in the first embodiment, all free rollers 28 are of the driven type; however, non-driven free rollers may be added, as alternatively shown in the description of the driving means.

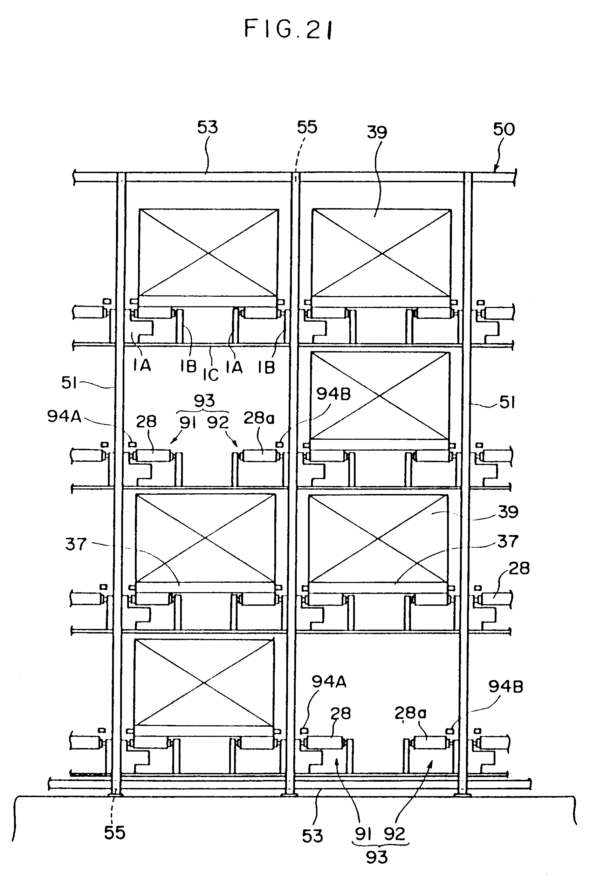

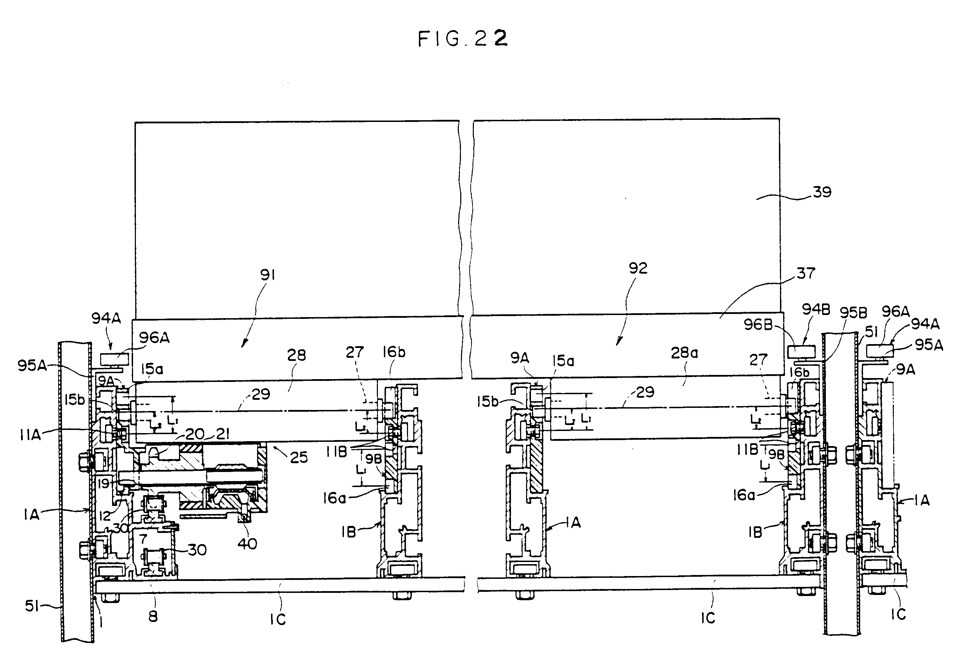

Now Figs. 21 and 22 show a first embodiment of the divided roller arrangement according to the invention.

As shown in Figs. 21 and 22, according to the invention each of the compartments defined between the pillars 51 and 52 of the shelf frame 50 has a transport device 93 consisting of two rows of roller conveyors 91 and 92 each having a number of free rollers. One roller conveyor 91 has free rollers 28 paired with driving devices 25. Some of the free rollers of the roller conveyor 91 may be replaced by free rollers which are not paired with driving devices. The other roller conveyor 92 has non-driven free rollers alone.

The lateral frames 1A and 1B on the side associated with the pillars 51 and 52 in the two roller conveyors 91 and 92 are provided with guide devices 94A and 94B positioned laterally of the transport path 38. These guide devices 94A and 94B comprise removable frames 95A and 95B on the lateral frames 1A and 1B, and guide rollers 96A and 96B disposed on the upper surfaces of said frames 95A and 95B. In addition, the guide devices 94A and 94B may be in the form of guide plates.

According to such arrangement, a pallet 37 is transported as it is supported on the two roller conveyors 91 and 92 while receiving a transport force from one roller conveyor 91 and while being guided by the guide rollers 96A and 95B. By installing roller conveyors 91 and 92 on opposite sides and designing only one of the two as the driven type, as provided in this embodiment of the invention, the driving system can be simplified and less expensive. Despite this one-sided driven type, pallets 37 can be prevented by the guide rollers 96A and 96B from zigzagging while they are transported.

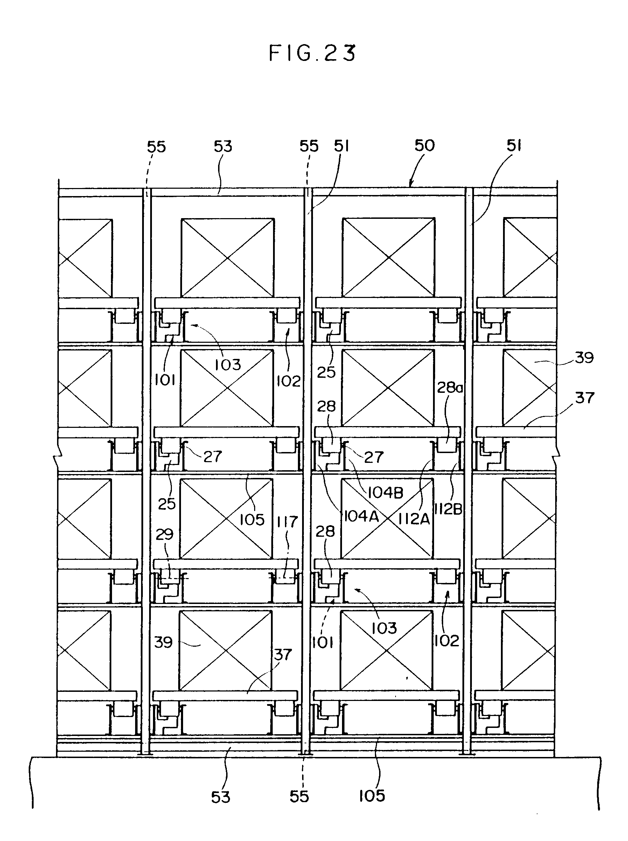

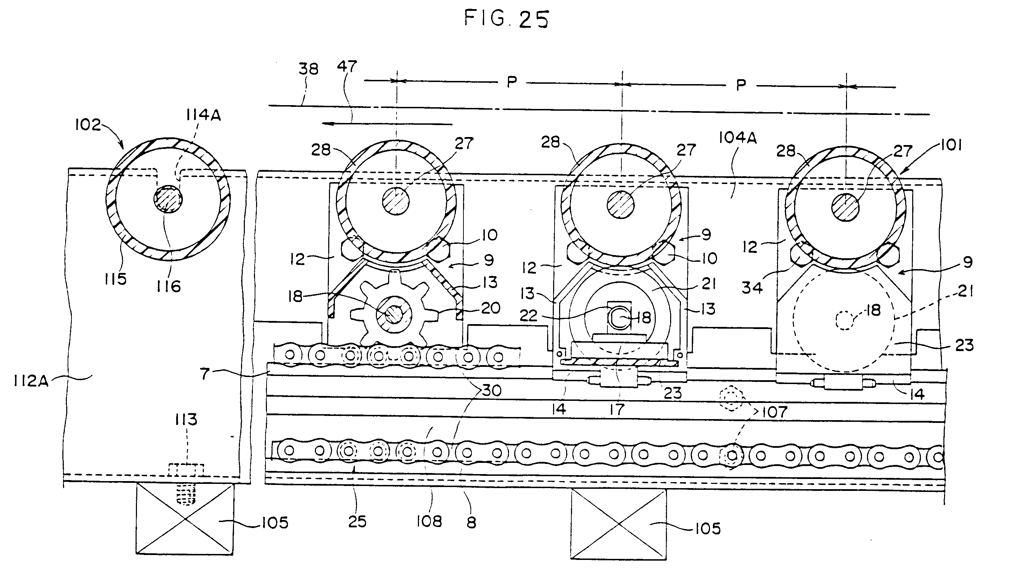

Figs. 23 through 28 show a second embodiment of the invention. In this embodiment, as in the first embodiment, two rows of roller conveyors 101 and 102 constitute a transport device 103, one roller conveyor 101 incorporating driving devices 25.

More specifically, one roller conveyor 101 has a pair of channel-like main frames 104A and 104B fixed to a base frame 105 by fasteners 106 such as bolts, said base frame being installed between front pillars 51 and between rear pillars 52. One main frame 104 has a rail bracket 108 fixed the lower inner surface portion thereof by bolts 107, said rail bracket 108 having a pair of upper and lower guide rails 7 and 8 extending lengthwise of the frame. Further, a plurality of support frames 9 of resin are disposed on the upper inner surface portion of one main frame 104 and along the length of the main frame 104A. These support frames 9 are fixed in position by applying nuts 111 to bolts 10 inserted outwardly into attachment holes 11 formed in the respective intermediate regions. Each support frame 9 is in the form of a case comprising a base plate portion 12 formed with attachment holes 11, a pair of cover plate portions 13 extending from the lower half of said base plate portion 12 toward the main frame 104B, and a connecting plate portion 14 extending between the lower ends of said cover plate portions 13.

A through-hole 15 is formed in the base plate portion 12 above said attachment holes 11. The upper corner of the other main frame 104B is formed with a top-opened engagement groove 16. A free roller 28 of resin is rotatably supported between the two main frames 104A and 104B through a roller shaft 27. More specifically, one end of the roller shaft 27 relatively rotatably inserted in the free roller 28 is inserted in the through-hole 15, the other end being dropped from above into the engagement groove 16 to complete the setting of the roller shaft 27; thus, the free roller 28 is rotatable around the roller axis 29. This free roller 38 is associated with a driving device 25.

The other roller conveyor 102 has a pair of main frames 112A and 112B, which are fixed on a base frame 105 by fasteners 113 such as bolts. The respective upper corners of these main frames 112A and 112B are formed with top-opened engagement grooves 114A and 114B. A non-driven type free roller 115 of resin is rotatably installed between the main frames 114A and 114B through a roller shaft 116. The opposite ends of the roller shaft 116 relatively rotatably inserted in the free roller 115 are dropped from above into the engagement grooves 114A and 114B to complete setting of the roller shaft 116. The numeral 117 denotes the roller axis.

According to such arrangement, the free rollers 28 are forcibly rotated by the driving devices 25 receiving power from the chain 30, whereby pallets 37 can be transported on the transport path 38. In this case, those free rollers 28 which have no pallets 37 arriving thereat and which, therefore, have no load acting thereon allow their roller shafts 27 to float at the other ends thereof in the engagement grooves 16; thus, those free rollers 28 do not strongly abut against the transmission rollers 21. Therefore, there is not so much power needed for driving those free rollers 28 on which no load is acting. When a pallet 37 arrives at such free roller 28, the load urges the free roller 28 against the transmission roller 21, whereby transmission of rotative power is sufficiently effected to ensure satisfactory transport based on forcible rotation.

During transport based on forcible rotation, the free rollers 115 of the other roller conveyor 102 make an accompanying rotation. Further, to prevent pallets 37 from moving sideways, the shelf frame 50 or the main frames 104A and 104B are provided with side guides (not shown) similar to those in the first embodiment.

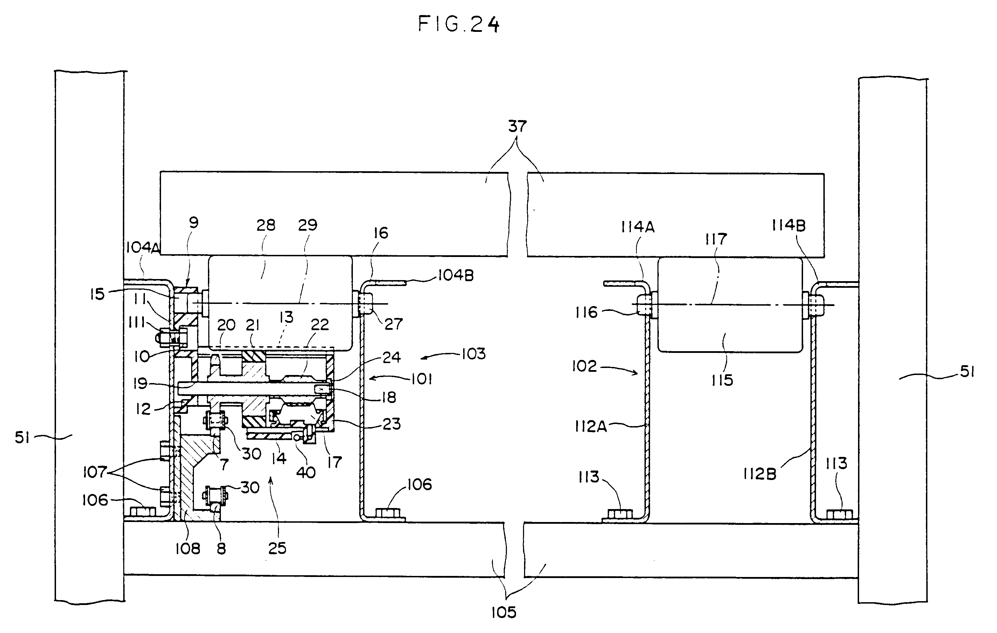

In addition, the roller conveyers 60 and 91 described above may be replaced by the roller conveyor 101 shown in Fig. 24.

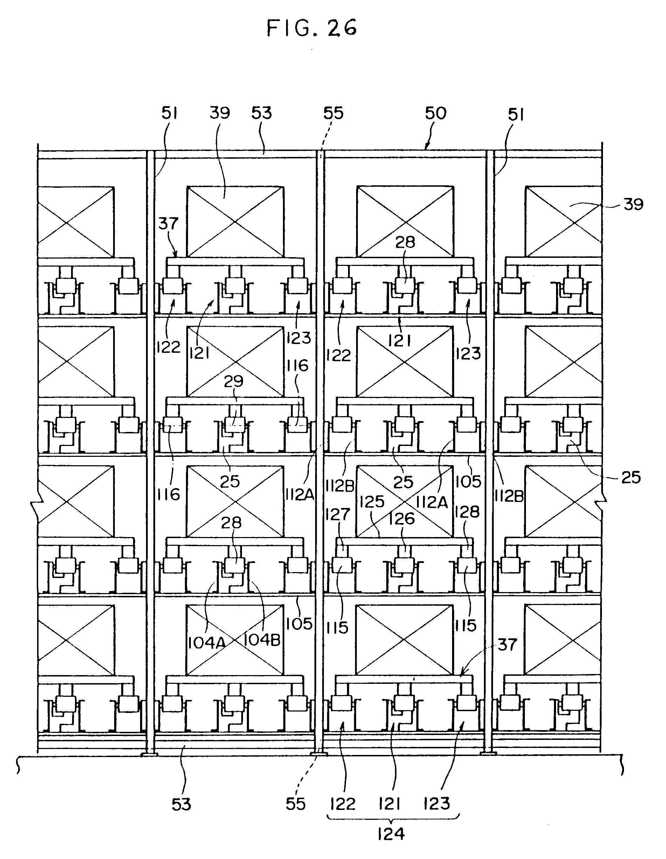

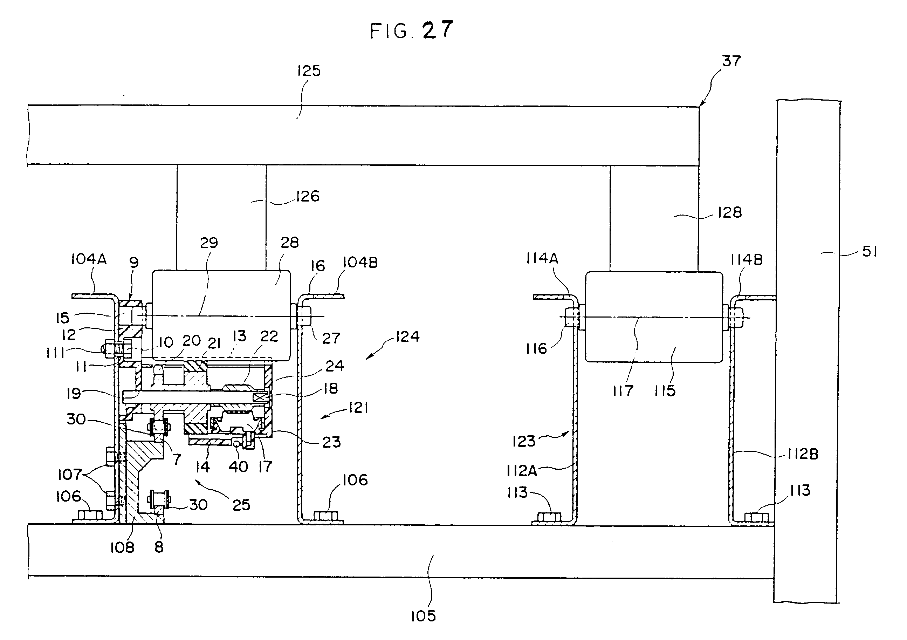

Figs. 26 and 27 show a third embodiment of the invention. In this embodiment, three rows of roller conveyors 121, 122 and 123 constitute a transport path 124, the middle roller conveyor 121 being provided with driving devices 25. The middle driven type roller conveyor 121 has the same construction as that of one roller conveyor 101 in the seventh embodiment, while the non-driven type roller conveyors 122 and 123 on the opposite sides have the same construction as that of the other roller conveyor 102 in the second embodiment.

According to such arrangement, if a pallet 37 comprising a load support plate 125 and three legs 126, 127 and 128 is used, the middle leg 126 can be supported on he middle roller conveyor while the legs 127 and 128 on the opposite sides can be supported on the roller conveyors 122 and 123 on the opposite sides. Thus, even such pallet 37, which has three legs 126, 127 and 128, can be stably and reliably transported. In addition, usual flat pallets 37 used in the other embodiments can also be likewise transported by the three roller conveyors 121, 122 and 123.

## Claims

1. A shelf apparatus using rollers comprising:
   a shelf frame (50),
   roller conveyers installed in a plurality of vertically spaced stages within said shelf frame (50), each of said roller conveyors defining a horizontal direction (47) of transport and comprising a plurality of free rollers adapted for free rotation and arranged in said direction (47) of transport, said free rollers being divided in a plurality of groups (A, B, C, D, E, F, G, H) in said direction of transport,

driving means 25) adapted to come in and out of frictional contact with said free rollers (28) for each group, the frictional contact of said driving means (25) causing said free rollers to rotate,
load detecting means (46) provided for each of said groups for detecting a load (39) to be transported in each group,
wherein said driving means (25) in two groups disposed adjacently to each other come in frictional contact with said rollers (28) when the load detecting means (46) disposed at least in the downstream one of said two groups does not detect the presence of a load (39), and
wherein said driving means (25) in the group (A) disposed at the downstream end come out of frictional contact with said free rollers (28) when the load detecting means (46) detects the presence of a load (39),
characterized in that
said free rollers constituting each of said roller conveyors, upon which a load is allowed to rest, form a plurality of files (101, 102, or 121, 122, 123) in said direction (47) of transport,
that opposed guide means (94A, 94B) are mounted on opposite sides of a transport path (38) defined by each of said roller conveyors, and
that said free rollers (28) adapted to be driven by said driving means (25) form only one (101 or 121) of said files (101, 102, or 121, 122, 123).

2. A shelf apparatus as set forth in claim 1, characterized in that the driving means (25) are operatively connected to and disconnected from only some of the free rollers (28) in each group (A, B, C, D, E, F, G, H).

3. A shelf apparatus using rollers as set forth in Claim 1, characterized in that the driving means (25) are operatively connected to and disconnected from only intermediate ones of the free rollers (28) in each group (A, B, C, D, E, F, G, H) as viewed in the direction of transport other than a single free roller or a plurality of free rollers located upstream as viewed in the direction of transport and a single free roller or a plurality of free rollers located downstream as viewed in the direction of transport.

4. A shelf apparatus using rollers as set forth in Claim 1, characterized in that the two driving means (25) of two adjacent groups (A, B, C, D, E, F, G, H) as viewed in the direction of transport are simultaneously operatively connected to the free rollers (28) when the load detecting means (46) located downstream as viewed in the direction of transport (47) is in the non-detecting state and when the load detecting means (46) located upstream as viewed in the direction of transport (47) is in the detecting state.

5. A shelf apparatus using rollers as set forth in Claim 1, characterized in that

each driving means (25) is operatively connected to and disconnected from a free roller (28) by a working fluid,

said shelf apparatus includes

a working fluid circuit (42, 43) for flowing said working fluid,

a first valve device (82) is provided in said working fluid circuit in each group other than the most downstream group as viewed in the direction of transport, said valve device having an actuator rod (81) which is capable of detecting a load to be transported in each group, wherein when the load is detected, the operative connection between the driving means (25) and free rollers (28) in each group is canceled by said working fluid,

a second valve device (84) is provided in said working fluid circuit in the most downstream group as viewed in the direction of travel, wherein the load to be transported in this group can be detected by a photosensor (46), and when the load is detected, the operative connection between the driving means (25) and free rollers (28) in this group is canceled by said working fluid.

6. A shelf apparatus using rollers as set forth in Claim 1, characterized in that

each driving means (25) is operatively connected to and disconnected from a free roller (28) by a working fluid,

said shelf apparatus includes

a working fluid circuit for flowing said working fluid,

a valve device is provided in said working fluid circuit in each group, said valve device having an actuator rod (81) which is capable of detecting a load to be transported in each group, wherein when the load is detected, the operative connection between the driving means (25) and free rollers (28) in each group is canceled by said working fluid.

## Patentansprüche

1. Regaleinrichtung unter Verwendung von Rollen, mit

einem Regalrahmen (50),

Rollenförderern, die in einer Vielzahl von vertikal beabstandeten Stufen innerhalb des Regalrahmens (50) angeordnet sind, wobei jeder Rollenförderer eine Horizontalrichtung (47) für den Transport begrenzt und eine Anzahl von freien Rollen beinhaltet, die für die freie Rotation ausgelegt sind und in der angegebenen Transportrichtung (47) angeordnet sind, wobei die freien Rollen in eine Vielzahl von Gruppen (A, B, C, D, E, F, G, H) in dieser Transportrichtung unterteilt sind,

einer Antriebsvorrichtung (25), die in und außer Reibungseingriff mit den freien Rollen (28) für jede Gruppe kommt, wobei der Reibungseingriff der Antriebsvorrichtung (25) die freien Rollen rotieren läßt,

einer Lasterfassungseinrichtung (46), die für jede der Gruppen zur Erfassung einer Last (39), die in jeder der Gruppen zu transportieren ist, vorgesehen ist,

wobei die Antriebseinrichtung (25) in zwei Gruppen, die benachbart zueinander sind, in Reibungseingriff mit den Rollen kommt, wenn die Lasterfassungeinrichtung (46), die zumindest in der in Transportrichtung gesehen hinteren der beiden Gruppen angeordnet ist, das Nichtvorhandensein einer Last (39) erfaßt, und wobei die Antriebseinrichtung (25) in der Gruppe (A), die an dem in Transportrichtung gesehen hintersten Ende angeordnet ist, außer Reibungseingriff mit den freien Rollen (28) kommt, wenn die Lasterfassungseinrichtung (46) das Vorhandensein einer Last (39) erfaßt, dadurch gekennzeichnet, daß die freien Rollen, die jede der Rollenförderer, auf denen eine Last lagern kann, darstellen, eine Vielzahl von Reihen (101, 102, oder 121, 122, 123) in der Transportrichtung (47) bilden,

die gegenüberliegenden Führungen (94A, 94B) auf entgegenliegenden Seiten eines Transportwagens (38) befestigt sind, der durch jede der Rollenförderer gebildet wird, und

daß die freien Rollen, die ausgelegt sind, durch die Antriebseinrichtung (25) angetrieben zu werden, lediglich eine (101 oder 121) der Reihen (101, 102, oder 121, 122, 123) zu bilden.

2. Regalvorrichtung nach Anspruch 1, dadurch gekennzeichnet, daß die Antriebseinrichtung (25) betriebsmäßig nur mit einigen der freien Rollen (28) in jeder der Gruppen (A, B, C, D, E, F, G, H) verbunden oder getrennt wird.

3. Regalvorrichtung unter der Verwendung von Rollen nach Anspruch 1, dadurch gekennzeichnet, daß die Antriebsvorrichtung (25) lediglich mit den mittleren der freien Rollen (28) in jeder der Gruppen (A, B, C, D, E, F, G, H) in Transportrichtung im Gegensatz zu einer einzelnen freien Rolle oder einer Vielzahl von freien Rollen, die aufwärts in Transportrichtung liegen, und einer einzelnen freien Rolle oder einer Vielzahl von freien Rollen, die abwärts in Transportrichtung liegen, verbunden oder getrennt wird.

4. Regalvorrichtung unter der Verwendung von Rollen nach Anspruch 1, dadurch gekennzeichnet, daß die zwei Antriebseinrichtungen (25) von zwei benachbarten Gruppen (A, B, C, D, E, F, G, H) in Transportrichtung zugleich betriebsmäßig mit den freien Rollen (28) verbunden sind, wenn die Lasterfassungseinrichtung (46), die in Transportrichtung abwärts angeordnet ist, in dem Zustand des Nichterfassens einer Last sich befindet, und wenn die Lasterfassungseinrichtung (46), die in Transportrichtung aufwärts angeordnet ist, eine Last erfaßt.

5. Regalvorrichtung unter der Verwendung von Rollen nach Anspruch 1, dadurch gekennzeichnet, daß

jede Antriebsvorrichtung (25) betriebsmäßig mit einer freien Rolle (28) durch ein Arbeitsfluid verbunden oder von ihr getrennt ist, wobei die Regaleinrichtung aufweist:

eine Arbeitsfluidschaltung (42, 43) zum Transport des Arbeitsfluids,

ein erstes Ventil (82), das in der Arbeitsfluidschaltung in jeder Gruppe außer in der in Transportrichtung gesehenen Endgruppe angeordnet ist, wobei das Ventil eine Bestätigungsstange (81) besitzt, die eine zu transportierende Last in jeder Gruppe erfassen kann, in der, wenn die Last erfaßt ist, die betriebsmäßige Verbindung zwischen der Antriebseinrichtung (25) und der freien Rolle (28) in jeder Gruppe durch das Arbeitsfluid aufhebt,

einem zweiten Ventil (84), das in dem Arbeitsfluidkreis in der in Transportrichtung am weitesten abwärts gelegenen Gruppe vorgesehen ist, wobei die zu transportierende Last in dieser Gruppe durch einen Fotosensor (46) erfaßt werden kann, und, wenn die Last erfaßt ist, die betriebsmäßige Verbindung zwischen der Antriebsvorrichtung (25) und den freien Rollen (28) in dieser Gruppe durch das Arbeitsfluid aufgehoben wird.

6. Regalvorrichtung unter der Verwendung von Rollen nach Anspruch 1, dadurch gekennzeichnet, daß

jede Antriebsvorrichtung (25) betriebsmäßig mit einer freien Rolle (28) durch ein Arbeitsfluid verbunden ist oder von ihr getrennt wird, wobei die Regaleinrichtung aufweist:

einen Arbeitsfluidkreis zum Transport des Arbeitsfluides, ein Ventil vorgesehen in dem Arbeitsfluidkreis jeder Gruppe, wobei dieses Ventil eine Betätigungsstange (81) besitzt, die in der Lage ist, eine zu transportierende Last in jeder Gruppe zu erfassen, wobei, wenn die Last erfaßt ist, die betriebsmäßige Verbindung zwischen der Antriebsvorrichtung (25) und der freien Rolle (28) in jeder Gruppe durch das Arbeitsfluid aufgehoben wird.

## Revendications

1. Dispositif de rayonnage à rouleaux, comprenant:

un bâti de rayonnage (50),

des transporteurs à rouleaux installés en plusieurs étages espacés verticalement dans ledit bâti de rayonnage (50), chacun de ces transporteurs à rouleaux définissant une direction horizontale (47) de transport et comprenant une multiplicité de rouleaux fous, montés de façon à tourner librement et disposés dans ladite direction (47) de transport, ces rouleaux fous étant divisés en plusieurs groupes (A, B, C, D, E, F, G, H) dans ladite direction de transport,

des moyens d'entraînement (25) agencés de façon à être placés en contact frottant et hors de contact frottant avec lesdits rouleaux fous (28) dans chaque groupe, le contact frottant desdits moyens d'entraînement (25) provoquant la rotation desdits rouleaux fous,

des moyens détecteurs de charge (46), associés à chacun desdits groupes pour détecter la présence d'une charge (39) qui doit être transportée dans chaque groupe,

dans lequel lesdits moyens d'entraînement (25), dans deux groupes disposés à la suite l'un de l'autre, entrent en contact frottant avec lesdits rouleaux (28) lorsque les moyens détecteurs de charge (46) disposés au moins dans celui de ces deux groupes qui est en aval ne détectent pas la présence d'une charge (39), et

dans lequel lesdits moyens d'entraînement (25) dans le groupe (A) disposé à l'extrémité aval sont mis hors de contact frottant avec lesdits rouleaux fous (28) lorsque les moyens détecteurs de charge (46) détectent la présence d'une charge (39),

caractérisé

en ce que les rouleaux fous qui constituent chacun desdits transporteurs à rouleaux et sur lesquels une charge peut reposer forment plusieurs files (101, 102 ou 121, 122, 123) dans ladite direction (47) de transport,

en ce que des moyens de guidage opposés (94A, 94B) sont montés de part et d'autre d'un chemin de transport (38) défini par chacun desdits transporteurs à rouleaux, et

en ce que lesdits rouleaux fous (28) qui sont susceptibles d'être entraînés par lesdits moyens d'entraînement (25) ne constituent que l'une (101 ou 121) desdites files (101, 102 ou 121, 122, 123).

2. Dispositif de rayonnage selon la revendication 1, caractérisé en ce que les moyens d'entraînement (25) ne sont mis en prise active et hors de prise qu'avec certains des rouleaux fous (28) dans chaque groupe (A, B, C, D, E, F, G, H).

3. Dispositif de rayonnage à rouleaux selon la revendication 1, caractérisé en ce que les moyens d'entraînement (25) ne sont mis en prise active et hors de prise qu'avec des rouleaux intermédiaires parmi les rouleaux fous (28) dans chaque groupe (A,B,C,D,E,F,G,H) en considérant le sens de transport, autres qu'un seul rouleau fou ou plusieurs rouleaux fous situés en amont en considérant le sens de transport et autres qu'un seul rouleau fou ou plusieurs rouleaux fous situés en aval en considérant le sens de transport.

4. Dispositif de rayonnage à rouleaux selon la revendication 1, caractérisé en ce que les deux moyens d'entraînement (25) de deux groupes voisins (A ... H) en considérant le sens de transport sont mis simultanément en prise active avec les rouleaux fous (28) lorsque les moyens détecteurs de charge (46) situés en aval en considérant le sens de transport (47) sont dans l'état de non-détection et lorsque les moyens détecteurs de charge (46) situes en amont en considérant le sens de transport (47) sont dans l'état de détection.

5. Dispositif de rayonnage à rouleaux selon la revendication 1, caractérisé en ce que chacun des moyens d'entraînement (25) est mis en prise active et hors de prise avec un rouleau fou (28) par un fluide moteur, en ce que ledit dispositif de rayonnage comprend un circuit de fluide moteur (42, 43) pour la circulation dudit fluide moteur, en ce qu'un premier dispositif de valve (82) est prévu dans ledit circuit de fluide moteur dans chaque groupe autre que le groupe situé le plus en aval en considérant le sens de transport, ce dispositif de valve comprenant une tige d'actionnement (81) qui est capable de détecter la présence d'une charge à transporter dans chaque groupe, la prise active entre les moyens d'entraînement (25) et les rouleaux fous (28) de chaque groupe étant supprimée par ledit fluide moteur lorsque la charge est détectée, et en ce qu'un second dispositif de valve (84) est prévu dans ledit circuit de fluide moteur dans le groupe situé le plus en aval en considérant le sens de transport, la charge à transporter dans ce groupe pouvant être détectée par un photocapteur (46) et la prise active entre les moyens d'entraînement (25) et les rouleaux fous (28) de ce groupe étant supprimée par ledit fluide moteur lorsque la charge est détectée.

6. Dispositif de rayonnage a rouleaux selon la revendication 1, caractérisé en ce que chacun des moyens d'entraînement (25) est mis en prise active et hors de prise avec un rouleau fou (28) par un fluide moteur, en ce que ledit dispositif de rayonnage comprend un circuit de fluide moteur pour la circulation dudit fluide moteur, en ce qu'un dispositif de valve est prévu dans ledit circuit de fluide moteur dans chaque groupe, ce dispositif de valve comprenant une tige d'actionnement (81) qui est capable de détecter la présence d'une charge à transporter dans chaque groupe, la prise active entre les moyens d'entraînement (25) et les rouleaux fous (28) de chaque groupe étant supprimée par ledit fluide moteur lorsque la charge est détectée.

FIG. I

EP 0 320 823 B1

# FIG. 2

EP 0 320 823 B1

FIG. 3

FIG. 4

FIG. 5

FIG. 6

FIG. 7

EP 0 320 823 B1

FIG. 3

FIG. 4

FIG. 5

FIG. 6

FIG. 7

EP 0 320 823 B1

FIG. 8

FIG. 9

FIG. 10

FIG. 11

FIG. 12

FIG. 13

FIG. 14

FIG.15

FIG.16

EP 0 320 823 B1

FIG. 17

EP 0 320 823 B1

FIG. 18

FIG. 19

FIG.20

# FIG.21

# FIG.22

EP 0 320 823 B1

FIG.23

# FIG.24

EP 0 320 823 B1

FIG. 25

EP 0 320 823 B1

27

EP 0 320 823 B1

# FIG. 26

28

FIG. 27

EP 0 320 823 B1